# EUROPÄISCHE PATENTSCHRIFT

(11) **EP 3 383 675 B1**
(45) Veröffentlichungstag und Bekanntmachung des Hinweises auf die Patenterteilung: **27.11.2019**
(21) Anmeldenummer: 16763531.7
(22) Anmeldetag: 13.09.2016
(51) Int. Cl.: B60C 11/12, B60C 11/03

(54) **FAHRZEUGLUFTREIFEN**
PNEUMATIC VEHICLE TIRES
PNEUMATIQUE DE VÉHICULE

(30) Priorität: 04.12.2015 DE 102015224289
(43) Veröffentlichungstag der Anmeldung: 10.10.2018
(73) Patentinhaber: Continental Reifen Deutschland GmbH, 30165 Hannover (DE)
(72) Erfinder: BROCKMANN, Jürgen, 30171 Hannover (DE); DIENSTHUBER, Franz, 60528 Frankfurt (DE); SENG, Matthias, 30453 Hannover (DE)
(74) Vertreter: Finger, Karsten
(86) Internationale Anmeldenummer: PCT/EP2016/071494
(87) Internationale Veröffentlichungsnummer: WO 2017/092897

(56) Entgegenhaltungen:
- EP-A1- 1 529 662
- EP-A1- 3 034 331
- DE-A1-102005 055 144

## Beschreibung

Die Erfindung betrifft einen Fahrzeugluftreifen, insbesondere für den Einsatz unter winterlichen Fahrbedingungen, mit einem Laufstreifen, welcher durch Rillen, beispielsweise in Umfangsrichtung orientierte Rillen, Querrillen, Diagonalrillen und dergleichen, in Profilblöcke gegliedert ist, wobei Profilblöcke mit zumindest drei Einschnitten, zwei äußeren Einschnitten und zumindest einem zwischen diesen verlaufenden inneren Einschnitt vorgesehen sind, wobei sich sämtliche Einschnitte zumindest im Wesentlichen parallel zueinander und zumindest im Wesentlichen in axialer Richtung erstrecken und in Draufsicht wellenförmig verlaufende mittlere Abschnitte aufweisen, wobei die Wellenform der wellenförmig verlaufenden Abschnitte des zumindest einen inneren Einschnittes eine größere Amplitude aufweist als die Wellenform der wellenförmig verlaufenden Abschnitte der äußeren Einschnitte.

Fahrzeugluftreifen mit Laufstreifen, die Profilblöcke mit in Wellen- bzw. Sinusform verlaufenden Einschnitten aufweisen, sind in unterschiedlichen Ausführungsvarianten bekannt. Wellenförmige Einschnitte sind vor allem dazu gut geeignet, die Griffeigenschaften des Laufstreifens auf winterlichen Fahrbahnen, wie auf Schnee, Schneematsch oder Eis, zu verbessern und haben durch ihren wellenförmigen Verlauf auch eine stabilisierende Wirkung auf die Profilblöcke.

Ein Fahrzeugluftreifen der eingangs genannten Art ist beispielweise aus der
DE 10 2005 055 144 A1 bekannt. Der Fahrzeugluftreifen weist einen Laufstreifen auf, welcher durch Querrillen und Umfangsrillen in Profilblöcke gegliedert ist. Die Profilblöcke sind mit Einschnitten versehen, welche in Draufsicht wellenförmig verlaufende Abschnitte aufweisen, wobei die Amplitude der Wellenform der wellenförmig verlaufenden Abschnitte in den äußeren Einschnitten geringer ist als die Amplitude des wellenförmig verlaufenden Abschnittes des bzw. jedes inneren Einschnittes. Derartige Einschnitte sollen insbesondere einen ungleichmäßigen Abrieb der Profilblöcke vermeiden.

Ein weiterer Fahrzeugluftreifen mit wellenförmig verlaufenden Einschnitten in Profilblöcken ist beispielsweise aus der EP 1 529 662 A1 bekannt. Diese Einschnitte sind derart ausgeführt, dass die Amplitude ihrer Wellenform in eine der Erstreckungsrichtungen der Einschnitte zunimmt. Dadurch soll auf die Stabilität bzw. Steifigkeit des Profilblockes beim Auftreten von Umfangs- und Querkräften gezielt Einfluss genommen werden können.

Einschnitte, deren wellenförmige Abschnitte relativ große Amplituden aufweisen, stellen Griffkantenkomponenten in Umfangs- und in Querrichtung zur Verfügung und sorgen daher für gute Traktions- und Bremseigenschaften auf schneeigem Untergrund und eine gute Übertragung von Lenkkräften. Darüber hinaus versteifen solche Einschnitte den Profilblock in erwünschter Weise. Beim Auftreten von Umfangskräften, insbesondere bei Reifen, die an der angetriebenen Achse montiert sind, formen bzw. verbiegen sich die einzelnen Profilblockelemente, in welche der Profilblock durch die Einschnitte gegliedert ist, wobei der Profilblock im Bereich der Wellenspitzen von Einschnitten, die bei Blockkanten verlaufen, mehr abreibt als im Bereich der Wellenspitzen von Einschnitten, die im mittleren Bereich des Profilblockes verlaufen. Dadurch entsteht ein sägezahnartiges Abriebsbild.

Der Erfindung liegt die Aufgabe zugrunde, einen Fahrzeugluftreifen der eingangs genannten Art derart zu verbessern, dass der erwähnte ungleichmäßige Abrieb zumindest weitgehend vermieden wird.

Gelöst wird die gestellte Aufgabe erfindungsgemäß dadurch, dass die Wellenform der wellenförmig verlaufenden Abschnitte des zumindest einen inneren Einschnittes eine größere Wellenlänge aufweist als die Wellenform der wellenförmig verlaufenden Abschnitte der äußeren Einschnitte.

Gemäß der Erfindung werden daher in Richtung der Blockränder Einschnitte angeordnet, deren wellenförmiger Abschnitt eine kleinere Amplitude und eine kleinere Wellenlänge aufweist als der wellenförmige Abschnitt des oder der im mittleren Bereich des Profilblockes verlaufenden Einschnitts bzw. Einschnitten. Dadurch werden die ansonsten auftretenden Unregelmäßigkeiten im Abrieb der weiter am Block außenliegenden, eher weicheren Profilblockelemente vermindert und es wird die Kontaktfläche der Blockelemente bei Umfangskräften und die übertragbare Kraft nur sehr wenig reduziert. In der Blockmitte werden die einzelnen Profilblockelemente beim Verkippen gut abgestützt und die Bewegungsmöglichkeit deshalb eingeschränkt, wobei ein geringeres Verkippen auch ein geringeres Auftreten von sägezahnförmigem Abrieb bedeutet. Es ist daher möglich, gerade im mittleren Bereich der Profilblöcke Einschnitte mit wellenförmigen Abschnitten mit größerer Amplitude und größeren Wellenlängen vorzusehen, um hier den Vorteil größerer Griffkantenkomponenten in Umfangsrichtung, beispielsweise für die Seitenführung auf schneeigem Untergrund, zu generieren. Die mit der Erfindung erzielbare Verringerung von ungleichmäßigem Abrieb führt ferner vorteilhafterweise auch dazu, dass das mit ungleichmäßigem Abrieb einhergehende höhere Reifen/Fahrbahngeräusch vermieden wird.

Um das Auftreten des erwähnten sägezahnförmigen Abriebes besonders gut zu vermeiden, ist es vorteilhaft, die Amplituden und die Wellenlängen der wellenförmig verlaufenden Abschnitte des zumindest einen inneren Einschnittes und der äußeren Einschnitte aufeinander abzustimmen. Vorzugsweise beträgt daher die Amplitude der Wellenform im wellenförmig verlaufenden Abschnitt des zumindest einen inneren Einschnittes 1,7 mm bis 2,5 mm, die Wellenlänge der Wellenform in diesem Abschnitt 2,5 mm bis 4,5 mm. Die Amplitude der Wellenform im wellenförmig verlaufenden Abschnitt der äußeren Einschnitte sollte 1,0 mm bis 1,5 mm betragen, die Wellenlänge der Wellenform in diesem Abschnitt 1,5 mm bis 3,0 mm.

Damit ein gut merkbarer Effekt eintritt, ist es ferner günstig, wenn die Amplitude der Wellenform im wellenförmig verlaufenden Abschnitt der äußeren Einschnitte um mindestens 0,5 mm kleiner ist als die Amplitude der Wellenform im wellenförmigen Abschnitt des zumindest einen inneren Einschnittes. Vorzugsweise sollte ferner die Wellenlänge der Wellenform im wellenförmig verlaufenden Abschnitt der äußeren Einschnitte um mindestens 1,0 mm kleiner sein als die Wellenlänge der Wellenform im wellenförmigen Abschnitt des zumindest einen inneren Einschnittes.

Für eine besonders vorteilhafte Übertragung von Umfangskräften im mittleren Bereich des Laufstreifens ist es ferner vorteilhaft, wenn die erfindungsgemäß ausgeführten Einschnitte in im mittleren Bereich des Laufstreifens angeordneten Profilblöcken ausgebildet sind.

Bei Profilblöcken, die eine relativ große Umfangserstreckung aufweisen, ist es ferner von Vorteil, wenn sie zumindest zwei innere Einschnitte besitzen, die zueinander benachbart verlaufen.

Weitere Merkmale, Vorteile und Einzelheiten der Erfindung werden nun anhand der Zeichnung, die ein Ausführungsbeispiel darstellt, näher beschrieben.

Dabei zeigen
Fig. 1 eine Draufsicht auf eine Teilabwicklung eines Laufstreifens eines Fahrzeugluftreifens und
Fig. 2 einen Profilblock des Laufstreifens aus Fig. 1 in vergrößerter Darstellung.

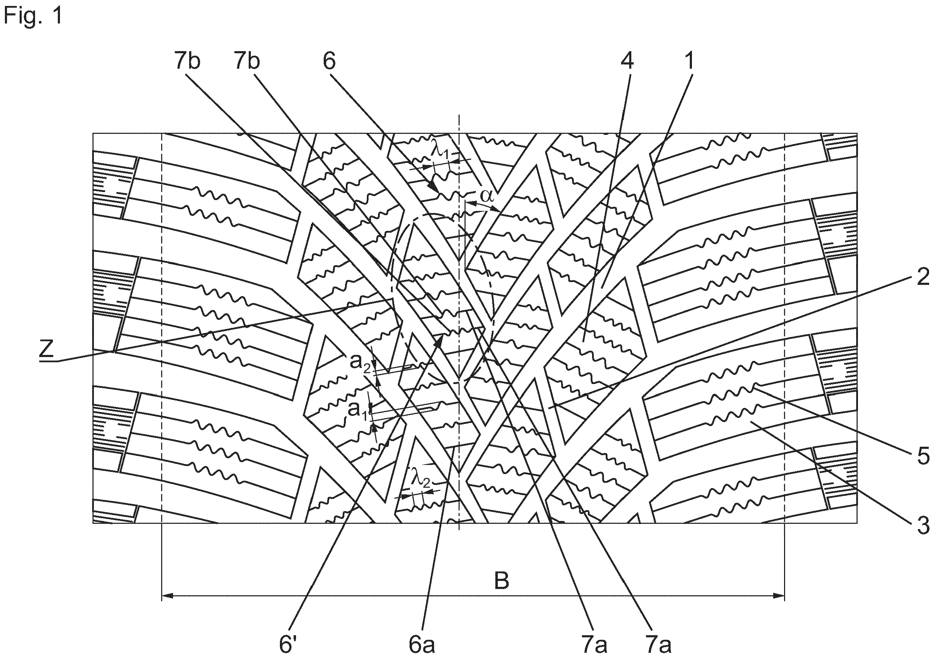

Der in Fig.1 gezeigte Laufstreifen ist für Winterreifen oder Ganzjahresreifen von Personenkraftwagen, Vans oder dergleichen vorgesehen. Der dargestellte Laufstreifen ist zwar laufrichtungsgebunden ausgeführt, die Erfindung ist jedoch nicht auf laufrichtungsgebundene Laufstreifen beschränkt. Mit B ist jene Breite des Laufstreifens bezeichnet, über welche der Reifen beim Abrollen mit dem Untergrund in Kontakt tritt. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B durch V-förmig verlaufende Diagonalrillen 1 und durch zwischen den benachbarten Diagonalrillen 1 jeweils verlaufende Umfangsrillen 2 in schulterseitige Profilblöcke 3und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens unter einem Winkel α ≤ 60°, insbesondere von 25° bis 40°, zur Umfangsrichtung, in Richtung zu den Laufstreifenrändern wird dieser Winkel zunehmend größer, sodass die Diagonalrillen 1 zwischen den schulterseitigen Profilblöcken 3 unter einem Winkel von 65° bis 90° zur Umfangsrichtung verlaufen. Die von dem einen Laufstreifenrand Richtung Laufstreifenmitte verlaufenden Diagonalrillen 1 sind gegenüber jenen, die vom anderen Laufstreifenrand zur Laufstreifenmitte verlaufen in Umfangsrichtung etwas versetzt. Im zentralen Bereich des Laufstreifens münden die Diagonalrillen 1 ineinander. In bekannter Weise weisen ferner die Diagonalrillen 1 im Laufstreifenzentrum eine geringere Breite auf als schulterseitig, wobei ihre Breite vom zentralen Bereich Richtung Laufstreifenränder kontinuierlich größer wird. Die im mittleren Bereich des Laufstreifens vorgesehenen Profilblöcke 4 sind zwischen den Diagonalrillen 1 und den bereits erwähnten Umfangsrillen 2 gebildet, wobei in jeder Laufstreifenhälfte zwischen benachbarten Diagonalrillen 1 jeweils zwei Profilblöcke 4 angeordnet sind.

Ein Reifen mit dem durch den Verlauf der Diagonalrillen 1 laufrichtungsgebunden ausgeführten Laufstreifen ist derart am Fahrzeug zu montieren, dass die laufstreifeninnenseitigen Enden der Diagonalrillen 1 beim Abrollen des Reifens bei Vorwärtsfahrt zuerst in der Untergrund eintreten. In Fig. 1 ist ferner zu erkennen, dass die Profilstrukturen, also die Profilblöcke 3, 4 sowie die Diagonalrillen 1, wie es üblich ist, nach einem Verfahren der Pitchlängenvariation geräuschoptimiert und daher mit unterschiedlichen Umfangserstreckungen bzw. Umfangslängen ausgeführt sind.

In den schulterseitigen Profilblöcken 3 ist jeweils eine Anzahl von, insbesondere zwei oder drei, Einschnitten 5 ausgebildet, welche sich im Wesentlichen parallel zu den zwischen den schulterseitigen Profilblöcken 3 verlaufenden Abschnitten der Diagonalrillen 1 und somit in axialer Richtung erstrecken und in an sich bekannter Weise in Draufsicht in Kombination geradlinig verlaufende und wellenförmig verlaufende Abschnitte aufweisen. Die mittigen Profilblöcke 4 sind jeweils mit zumindest drei Einschnitten 6, 6' sowie zum Teil mit Einschnitten 6a versehen, bei der in Fig. 1 gezeigten Ausführung befinden sich in jedem Profilblock fünf bis sechs Einschnitte 6, 6'. Sämtliche Einschnitte 5, 6, 6', 6a weisen insbesondere eine Breite von 0,4 mm bis 0,6 mm auf, ihre Tiefe entspricht höchstens der maximalen Profiltiefe, welche bei Reifen für Personenkraftwagen üblicherweise 6 mm bis 8,5 mm beträgt. Die Einschnitte 5, 6, 6', 6a können Abschnitte unterschiedlicher Tiefen aufweisen, insbesondere in an sich bekannter Weise Endabschnitte geringerer Tiefe besitzen.

Die Einschnitte 6, 6', 6a in den Profilblöcken 4 erstrecken sich jeweils parallel zueinander und unter Winkeln β zur Umfangsrichtung mit zu den Diagonalrillen 1 gegensinniger Neigung zur Umfangsrichtung. Die Winkel β betragen 60° bis 85°. In Profilblöcken 4, die im zentralen Bereich des Laufstreifens angeordnet sind, erstrecken sich die Einschnitte 6, 6', 6a unter einem größeren Winkel zur Umfangsrichtung als die Einschnitte 6, 6', 6a in den den Schulterblöcken 3 benachbarten Profilblöcken 4.

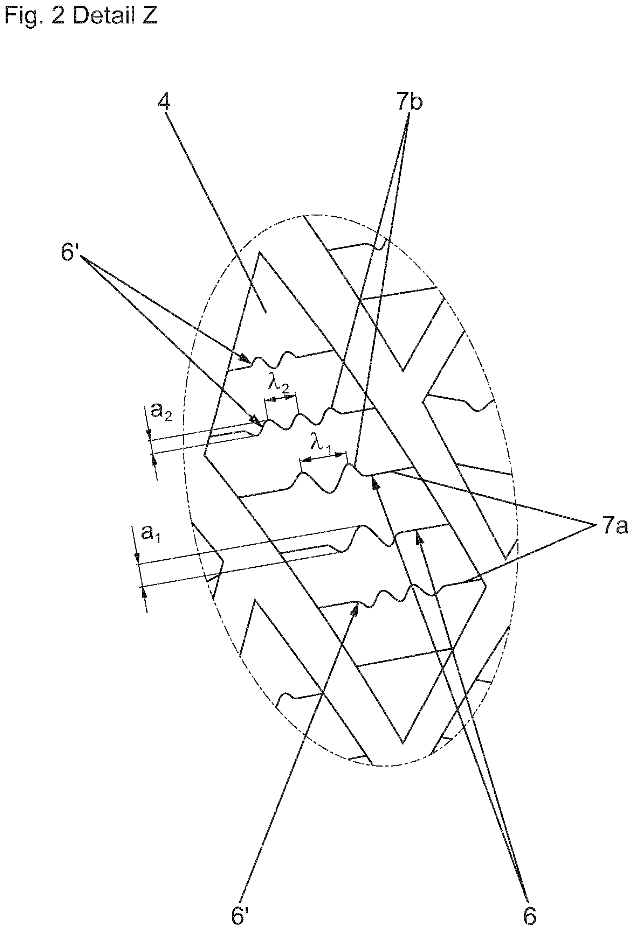

Fig. 2 zeigt eine Draufsicht auf einen Profilblock 4 aus dem zentralen Bereich des Laufstreifens mit zwei Einschnitten 6 und drei Einschnitten 6', welche den Profilblock 4 durchqueren und geradlinig verlaufende Endabschnitte 7a aufweisen, mit welchen die Einschnitte 6, 6' in die den Profilblock 4 umgebenden Rillen, entweder Diagonalrillen 1 oder Umfangsrillen 2, einmünden. Zwischen diesen Endabschnitten 7a weisen die Einschnitte 6, 6' jeweils einen mittleren, in Wellen- bzw. Sinusform verlaufenden Abschnitt 7b auf. Die Wellenform umfasst zumindest eine Wellenlänge, insbesondere zumindest zwei Wellenlängen, je nach der Position des Einschnittes 6, 6' im Profilblock und je nach der äußeren Form bzw. Ausgestaltung des Profilblockes 4. Bei dem in Fig. 2 gezeigten, in Draufsicht ausgeprägt parallelogrammförmigen und in Umfangsrichtung länglichen Profilblock 4 mit zwei stumpfwinkeligen und zwei spitzwinkeligen Ecken ist im Bereich der einen spitzwinkelige Ecke des Profilblockes 4 ein kurzer, den Profilblock 4 geradlinig durchquerender Einschnitte 6a ausgebildet. Die gegenseitigen Abstände der Einschnitten 6, 6', 6a sind in jedem Profilblock 4 zumindest im Wesentlichen gleich groß.

Je nach der Anzahl der Einschnitte 6, 6' im Profilblock 4 ist zumindest ein Einschnitt 6, insbesondere sind zumindest zwei Einschnitte 6, innere Einschnitte, die im mittleren Bereich des Profilblockes 5 ausgebildet sind und welche zwischen äußeren Einschnitten 6' verlaufen. Der bzw. die innere(n) Einschnitt(e) 6 weisen jeweils einen wellenförmigen Abschnitt 7b auf, dessen Amplitude a₁ und dessen Wellenlänge λ₁ größer ist als die Amplitude a₂ und die Wellenlänge λ₂ der wellenförmigen Abschnitte 7b der äußeren Einschnitte 6'. Es gibt daher in jedem Profilblock 4 zumindest einen inneren Einschnitt 6 mit einem mittleren wellenförmigen Abschnitt 6b mit der Amplitude a₁ und der Wellenlänge λ₁ und zumindest zwei äußere Einschnitte 6' mit einem wellenförmigen mittleren Abschnitt 6b mit der Amplitude a₂ und der Wellenlänge λ₂.

Die Amplitude a₁ der Wellenform im Abschnitt 7b des inneren Einschnittes 6 bzw. der inneren Einschnitte 6 beträgt 1,7 mm bis 2,5 mm, die Wellenlänge λ₁ in diesem Abschnitt 2,5 mm bis 4,5 mm. In den äußeren Einschnitten 6' beträgt die Amplitude a₂ der Wellenform im Abschnitt 7b 1,0 mm bis 1,5 mm, die Wellenlänge λ₂ 1,7 mm bis 3,0 mm. Die Amplitude a₂ ist um mindestens 0,5 mm geringer als die Amplitude a₁, die Wellenlänge λ₂ ist zumindest 1,0 mm geringer als die Wellenlänge λ₁.

Durch die besondere Ausgestaltung der Einschnitte 6 und 6' in den Profilblöcken 4 wird vor allem die Ausbildung von unregelmäßigem Abrieb, insbesondere eines sägezahnartigen Abriebs vermieden, wobei gleichzeitig die bei Kurvenfahrt auf schneeigem oder eisigem Grund wichtige "Griffkantenkomponente" in Querrichtung erhalten bleiben.

### Bezugsziffernliste

- 1: Diagonalrille
- 2: Umfangsrille
- 3: schulterseitiger Profilblock
- 4: mittiger Profilblock
- 5, 6, 6', 6a: Einschnitt
- 7a: Endabschnitt
- 7b: wellenförmiger Abschnitt
- a_{1,2}: Amplitude
- λ_{1,2}: Wellenlänge
- B: Laufstreifenbreite
- α, β: Winkel

## Patentansprüche

1. Fahrzeugluftreifen, insbesondere für den Einsatz unter winterlichen Fahrbedingungen, mit einem Laufstreifen, welcher durch Rillen, beispielsweise in Umfangsrichtung orientierte Rillen, Querrillen, Diagonalrillen (1) und dergleichen, in Profilblöcke (4) gegliedert ist, wobei Profilblöcke (3) mit zumindest drei Einschnitten (6, 6'), zwei äußeren Einschnitten (6') und zumindest einem zwischen diesen verlaufenden inneren Einschnitt (6) vorgesehen sind, wobei sich sämtliche Einschnitte (6, 6') zumindest im Wesentlichen parallel zueinander und zumindest im Wesentlichen in axialer Richtung erstrecken und in Draufsicht wellenförmig verlaufende mittlere Abschnitte (7b) aufweisen,
wobei die Wellenform der wellenförmig verlaufenden Abschnitte (7b) des zumindest einen inneren Einschnittes (6) eine größere Amplitude (a₁) aufweist als die Wellenform der wellenförmig verlaufenden Abschnitte (7b) der äußeren Einschnitte (6'),
**dadurch gekennzeichnet,**
**dass** die Wellenform der wellenförmig verlaufenden Abschnitte (7b) des zumindest einen inneren Einschnittes (6) eine größere Wellenlänge (λ₁) aufweist als die Wellenform der wellenförmig verlaufenden Abschnitte (7b) der äußeren Einschnitte (6').

2. Fahrzeugluftreifen nach Anspruch 1, **dadurch gekennzeichnet, dass** die Amplitude (a₁) der Wellenform im wellenförmig verlaufenden Abschnitt (7b) des zumindest einen inneren Einschnittes (6) 1,7 mm bis 2,5 mm beträgt.

3. Fahrzeugluftreifen nach einem Anspruch 1 oder 2, **dadurch gekennzeichnet, dass** die Wellenlänge (λ₁) der Wellenform im wellenförmig verlaufenden Abschnitt (7b) des zumindest einen inneren Einschnittes (6) 2,5 mm bis 4,5 mm beträgt.

4. Fahrzeugluftreifen nach Anspruch 1, **dadurch gekennzeichnet, dass** die Amplitude (a2) der Wellenform im wellenförmig verlaufenden Abschnitt (7b) der äußeren Einschnitte (6') 1,0 mm bis 1,5 mm beträgt.

5. Fahrzeugluftreifen nach einem Anspruch 1 oder 4, **dadurch gekennzeichnet, dass** die Wellenlänge (λ₂) der Wellenform im wellenförmig verlaufenden Abschnitt (7b) der äußeren Einschnitte (6') 1,5 mm bis 3,0 mm beträgt.

6. Fahrzeugluftreifen nach einem der Ansprüche 1 bis 5, **dadurch gekennzeichnet, dass** die Amplitude (a₂) der Wellenform im wellenförmig verlaufenden Abschnitt (7b) der äußeren Einschnitte (6') um mindestens 0,5 mm kleiner ist als die Amplitude (a₁) der Wellenform im wellenförmigen Abschnitt (7b) des zumindest einen inneren Einschnittes (6).

7. Fahrzeugluftreifen nach einem der Ansprüche 1 bis 6, **dadurch gekennzeichnet, dass** die Wellenlänge (λ₂) der Wellenform im wellenförmig verlaufenden Abschnitt (7b) der äußeren Einschnitte (6') um mindestens 1,0 mm kleiner ist als die Wellenlänge (λ₁) der Wellenform im wellenförmigen Abschnitt (7b) des zumindest einen inneren Einschnittes (6).

8. Fahrzeugluftreifen mit einem Laufstreifen mit schulterseitigen Profilblöcken (3) und mit im mittleren Bereich des Laufstreifens angeordneten Profilblöcken (4), nach einem der Ansprüche 1 bis 7, **dadurch gekennzeichnet, dass** die Einschnitte (6, 6') mit wellenförmig verlaufenden Abschnitten (7b) unterschiedlicher Amplituden (a₁, a₂) und Wellenlängen (λ₁, λ₂) in den mittleren Profilblöcken (4) ausgebildet sind.

9. Fahrzeugluftreifen nach einem der Ansprüche 1 bis 8, **dadurch gekennzeichnet, dass** Profilblöcke (4) vorgesehen sind, welche zumindest zwei innere Einschnitte (6) aufweisen, die zueinander benachbart verlaufen.

10. Fahrzeugluftreifen nach einem der Ansprüche 1 bis 9, **dadurch gekennzeichnet, dass** Profilblöcke (4) vorgesehen sind, welche an zumindest einer Seite des zumindest einen inneren Einschnittes (6) zumindest zwei äußere Einschnitte (6') aufweisen.

## Claims

1. Pneumatic vehicle tyre, in particular for use under winter driving conditions, having a tread, which is subdivided into profile blocks (4) by grooves, for example circumferentially oriented grooves, transverse grooves, diagonal grooves (1) and the like, wherein profile blocks (3) having at least three sipes (6, 6'), two outer sipes (6') and at least one inner sipe (6) extending therebetween, are provided, wherein all the sipes (6, 6') extend at least substantially parallel to one another and at least substantially in an axial direction and have central portions (7b) that extend in an undulating manner in plan view,
wherein the wave shape of the portions (7b) of the at least one inner sipe (6) that extend in an undulating manner has a greater amplitude (a₁) than the wave shape of the portions (7b) of the outer sipes (6') that extend in an undulating manner,
**characterized**
**in that** the wave shape of the portions (7b) of the at least one inner sipe (6) that extend in an undulating manner has a greater wavelength (λ₁) than the wave shape of the portions (7b) of the outer sipes (6') that extend in an undulating manner.

2. Pneumatic vehicle tyre according to Claim 1, **characterized in that** the amplitude (a₁) of the wave shape in the portion (7b) of the at least one inner sipe (6) that extends in an undulating manner is 1.7 mm to 2.5 mm.

3. Pneumatic vehicle tyre according to either of Claims 1 and 2, **characterized in that** the wavelength (λ₁) of the wave shape in the portion (7b) of the at least one inner sipe (6) that extends in an undulating manner is 2.5 mm to 4.5 mm.

4. Pneumatic vehicle tyre according to Claim 1, **characterized in that** the amplitude (a₂) of the wave shape in the portion (7b) of the outer sipes (6') that extends in an undulating manner is 1.0 mm to 1.5 mm.

5. Pneumatic vehicle tyre according to either of Claims 1 and 4, **characterized in that** the wavelength (λ₂) of the wave shape in the portion (7b) of the outer sipes (6') that extends in an undulating manner is 1.5 mm to 3.0 mm.

6. Pneumatic vehicle tyre according to one of Claims 1 to 5, **characterized in that** the amplitude (a₂) of the wave shape in the portion (7b) of the outer sipes (6') that extends in an undulating manner is at least 0.5 mm smaller than the amplitude (a₁) of the wave shape in the portion (7b) of the at least one inner sipe (6) that extends in an undulating manner.

7. Pneumatic vehicle tyre according to one of Claims 1 to 6, **characterized in that** the wavelength (λ₂) of the wave shape in the portion (7b) of the outer sipes (6') that extends in an undulating manner is at least 1.0 mm smaller than the wavelength (λ₁) of the wave shape in the undulating portion (7b) of the at least one inner sipe (6).

8. Pneumatic vehicle tyre having a tread with shoulder-side profile blocks (3) and with profile blocks (4) arranged in the central region of the tread, according to one of Claims 1 to 7, **characterized in that** the sipes (6, 6') are formed in the central profile blocks (4) with portions (7b) that extend in an undulating manner with different amplitudes (a₁, a₂) and wavelengths (λ₁, λ₂).

9. Pneumatic vehicle tyre according to one of Claims 1 to 8, **characterized in that** profile blocks (4) are provided that have at least two inner sipes (6) that extend adjacently to one another.

10. Pneumatic vehicle tyre according to one of Claims 1 to 9, **characterized in that** profile blocks (4) are provided that have at least two outer sipes (6') on at least one side of the at least one inner sipe (6) .

## Revendications

1. Pneumatique de véhicule, destiné notamment à être utilisé dans des conditions de roulement hivernales, ledit pneumatique comprenant une bande de roulement qui est divisée en blocs profilés (4) par des rainures, par exemple des rainures orientées dans la direction circonférentielle, des rainures transversales, des rainures diagonales (1) et similaires, les blocs profilés (3) étant pourvus d'au moins trois incisions (6, 6'), de deux incisions extérieures (6') et d'au moins une incision intérieure (6) s'étendant entre celles-ci, toutes les incisions (6, 6') s'étendant au moins sensiblement parallèlement entre elles et au moins sensiblement dans la direction axiale et comportant des parties médianes (7b) ondulées en vue de dessus, la forme ondulée des parties ondulées (7b) de l'au moins une incision intérieure (6) ayant une amplitude (a₁) supérieure à la forme ondulée des parties ondulées (7b) des incisions extérieures (6'),
**caractérisé en ce que** la forme ondulée des parties ondulées (7b) de l'au moins une incision intérieure (6) a une longueur d'onde (λ₁) supérieure à celle de la forme ondulée des parties ondulées (7b) des incisions extérieures (6').

2. Pneumatique de véhicule selon la revendication 1, **caractérisé en ce que** l'amplitude (a₁) de la forme ondulée de la partie ondulée (7b) de l'au moins une incision intérieure (6) est de 1,7 mm à 2,5 mm.

3. Pneumatique de véhicule selon la revendication 1 ou 2, **caractérisé en ce que** la longueur d'onde (λ₁) de la forme ondulée de la partie ondulée (7b) de l'au moins une incision intérieure (6) est de 2,5 mm à 4,5 mm.

4. Pneumatique de véhicule selon la revendication 1, **caractérisé en ce que** l'amplitude (a₂) de la forme ondulée de la partie ondulée (7b) des incisions extérieures (6') est de 1,0 mm à 1,5 mm.

5. Pneumatique de véhicule selon la revendication 1 ou 4, **caractérisé en ce que** la longueur d'onde (λ₂) de la forme ondulée de la partie ondulée (7b) des incisions extérieures (6') est de 1,5 mm à 3,0 mm.

6. Pneumatique de véhicule selon l'une des revendications 1 à 5, **caractérisé en ce que** l'amplitude (a₂) de la forme ondulée de la partie ondulée (7b) des incisions extérieures (6') est inférieure d'au moins 0,5 mm à l'amplitude (a₁) de la forme ondulée de la partie ondulée (7b) de l'au moins une incision intérieure (6).

7. Pneumatique de véhicule selon l'une des revendications 1 à 6, **caractérisé en ce que** la longueur d'onde (λ₂) de la forme ondulée de la partie ondulée (7b) des incisions extérieures (6') est inférieure d'au moins 1,0 mm à la longueur d'onde (λ₁) de la forme ondulée de la partie ondulée (7b) de l'au moins une incision intérieure (6).

8. Pneumatique de véhicule comprenant une bande de roulement pourvue de blocs profilés côté épaulement (3) et de bocs profilés (4) disposés dans la zone médiane de la bande de roulement, selon l'une des revendications 1 à 7, **caractérisé en ce que** les incisions (6, 6') sont conçues avec des parties ondulées (7b) de différentes amplitudes (a₁, a₂) et longueurs d'onde (λ₁, λ₂) dans les blocs profilés médians (4).

9. Pneumatique de véhicule selon l'une des revendications 1 à 8, **caractérisé en ce que** des blocs profilés (4) sont prévus qui comportent au moins deux incisions intérieures (6) qui s'étendent l'une à côté de l'autre.

10. Pneumatique de véhicule selon l'une des revendications 1 à 9, **caractérisé en ce que** des blocs profilés (4) sont prévus qui comportent sur au moins un côté de l'au moins une incision intérieure (6) au moins deux incisions extérieures (6').
